# EUROPEAN PATENT SPECIFICATION

(11) **EP 3 355 238 B1**
(45) Date of publication and mention of the grant of the patent: **11.03.2026**
(21) Application number: 17153502.4
(22) Date of filing: 27.01.2017
(51) Int. Cl.: G06V 20/58

(54) **DEVICE AND METHOD FOR FLICKER REMOVAL BY IMAGE ANALYSIS**
VORRICHTUNG UND VERFAHREN ZUR FLIMMERBESEITIGUNG DURCH BILDANALYSE
DISPOSITIF ET PROCÉDÉ DE SUPPRESSION DE SCINTILLEMENT PAR ANALYSE D'IMAGE

(43) Date of publication of application: 01.08.2018
(73) Proprietor: AUMOVIO Autonomous Mobility Germany GmbH, 85057 Ingolstadt (DE)
(72) Inventor: Kudana, Arun, 560073 Bangalore (IN); Bhadouria, Vivek Singh, 227412 Sultanpur (IN); Asvatha Narayanan, Vishnu Vardhana, 560037 Kundanahalli (IN)
(74) Representative: Aumovio Corporation

(56) References cited:
- KOTARO NAKAZAWA ET AL: "Flicker and black-streak artifact removal from images of display monitors taken by video cameras", SIGNAL&INFORMATION PROCESSING ASSOCIATION ANNUAL SUMMIT AND CONFERENCE (APSIPA ASC), 2012 ASIA-PACIFIC, IEEE, 3 December 2012 (2012-12-03), pages 1 - 4, XP032309840, ISBN: 978-1-4673-4863-8
- "Master Thesis", 2 September 2010, article HASAN IRMAK: "REAL TIME TRAFFIC SIGN RECOGNITION SYSTEM ON FPGA-Chapters 2 and 3", XP055382694

## Description

### FIELD OF THE INVENTION

The present invention relates to the field of object and traffic sign recognition. Particularly, the present invention relates to a device and a method for flicker removal by image analysis.

### BACKGROUND OF THE INVENTION

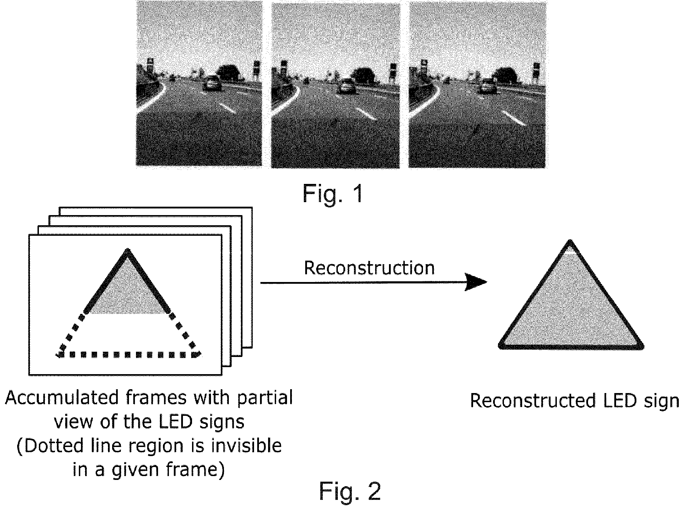

Sign recognition project aims at detecting and classifying the traffic signs occurring on the road sides. Currently, LED traffic signs are often only partially depicted. The LED traffic lights as shown in pictures of Figure 1 actually flicker at the line frequency, for example 50 Hz.

When these LED traffic lights are captured by camera or an image sensor with a refreshing rate at for instance 30 Hz, due to lack of time synchronization between the two, the LED lights appear to flicker, e.g. going on and off, partially or fully, as depicted in the consecutive frames of Figure 1.

Hence any further traffic sign recognizer, TSR, would fail as a wrong shape would be provided.

A method for recognizing traffic signs of varying shapes was described by H. Irmak in his master thesis "Real time traffic sign recognition system on FPGA", retrieved from the internet: https://etd.lib.metu.edu.tr/upload/12612360/index.pdf (March, 18, 2025). Images frames are segmented into red and blue regions and subsequently a Laplacian of Gaussian based edge detection is applied to the segmented image followed by a Hough Transform for shape extraction, whereas on the extracted shapes a recognition is executed based on Informative Pixel Percentage matching.

A flicker and black-streak artifact removal was suggested by K. Nakazawa et al. in their article "Flicker and black-streak artifact removal from images of display monitors taken by video cameras", published 2012 in Signal & Information processing association annual summit and conference (APSIPA ASC), ASIA-PACIFIC, IEEE, p. 1-4, ISBN: 978-1-4673-4863-8. It is suggested to recover areas deteriorated by black streak artefacts based on light blending. Frames used for blending are chosen based on blinking intervals of the streaks obtained by analyzing a sequence of luminance oscillation in the time direction. To subsequently remove the streaks, two blending methods, simple light blending and multi-resolution light blending are applied.

### SUMMARY OF THE INVENTION

There may be a need to improve device and methods for flicker removal by image analysis of traffic signs for a vehicle.

These needs are met by the subject-matter of the independent claims. Further exemplary embodiments are evident from the dependent claims and the following description.

An aspect of the present invention relates to a device for flicker removal by image analysis. The device comprises:
a LED-region identifier, which is configured to identify a portion of a LED traffic sign in at least one starting frame provided by an image sensor; the device further comprises a shape constructor, which is configured to calculate a shape for a reconstructed LED sign based on the identified portion; the device further comprises a color verifier, which is configured to perform a color check of the reconstructed LED sign; the device further comprises a tracker, which is configured to track the shape of the reconstructed LED sign in at least one another frame provided by the image sensor; the device further comprises a memory, which is configured to accumulate cutouts, the cutouts being defined as cropped out regions of images corresponding to the tracked shape of the reconstructed LED sign; and the device further comprises a frame reconstructor, which is configured to reconstruct the verified reconstructed LED sign based on the accumulated cutouts of the at least one starting frame and the at least one another frame provided by the image sensor, wherein the reconstructing of the LED sign based on the accumulated cutouts comprises applying an affine transformation to the cutouts on the basis of the shape of the reconstructed LED sign, aligning the cutouts, and registering the images corresponding to the cutouts.

The present device for flicker removal by image analysis fits very well in the traffic sign recognition, TSR, module by acting as a supplement to the detection stage of the TSR module.

The present device for flicker removal by image analysis provides in a first stage a sign recognition module that is to detect the signs with a follow up tracking and classification.

Since, the performing of the shape detection and reconstruction is performed independently, the present method can directly pass the reconstructed output obtained from the proposed LED reconstruction module to classification stage.

A further, second aspect of the present invention relates to a method for flicker removal by image analysis, the method comprising the following steps of: identifying a portion of a LED traffic sign in at least one starting frame provided by an image sensor by means of a LED-region identifier; calculating a shape for a reconstructed LED sign based on the identified portion by means of a shape constructor; performing a color check of the reconstructed LED sign by means of a color verifier; tracking the shape of the reconstructed LED sign in at least one another frame provided by the image sensor by means of a tracker; accumulating cutouts, the cutouts being defined as cropped out regions of images corresponding to the tracked shape of the reconstructed LED sign, by means of a memory; and reconstructing the verified reconstructed LED sign based on the accumulated cutouts of the at least one starting frame and the at least one another frame provided by the image sensor by means of a frame reconstructor by projecting a position of the reconstructed LED sign in the at least one starting frame to a position of the reconstructed LED sign in the least one another frame, wherein the reconstructing of the LED sign based on the accumulated cutouts comprises applying an affine transformation to the cutouts on the basis of the shape of the reconstructed LED sign, aligning the cutouts, and registering the images corresponding to the cutouts.

According to an exemplary embodiment of the present invention, the LED-region identifier is configured to identify the portion of the LED traffic sign by identifying rectangular areas and by performing color checking of the identified rectangular areas.

According to an exemplary embodiment of the present invention, the color verifier is configured to perform the color check of the reconstructed LED sign by performing a check for a black color.

According to an exemplary embodiment of the present invention, the shape constructor is configured to calculate the shape for the reconstructed LED sign based on template matching.

According to an exemplary embodiment of the present invention, the frame reconstructor is configured to reconstruct the verified reconstructed LED sign of the at least one starting frame in at least one another frame provided by the image sensor by projecting a position of the reconstructed LED sign in the at least one starting frame to a position of the reconstructed LED sign in the least one another frame.

According to an exemplary embodiment of the present invention, the frame reconstructor is configured to iteratively reconstruct the verified reconstructed LED sign in consecutive frames.

A computer program performing the method of the present invention may be stored on a computer-readable medium. A computer-readable medium may be a floppy disk, a hard disk, a CD, a DVD, an USB (Universal Serial Bus) storage device, a RAM (Random Access Memory), a ROM (Read Only Memory) or an EPROM (Erasable Programmable Read Only Memory).

A computer-readable medium may also be a data communication network, for example the Internet, which allows downloading a program code.

The methods, systems, and devices described herein may be implemented as software in a Digital Signal Processor, DSP, in a micro-controller or in any other side-processor or as a hardware circuit within an application specific integrated circuit, ASIC, CPLD or FPGA.

The present invention can be implemented in digital electronic circuitry or in computer hardware, firmware, software, or in combinations thereof, for instance in available hardware of conventional medical imaging devices or in new hardware dedicated for processing the methods described herein.

### BRIEF DESCRIPTION OF THE DRAWINGS

A more complete appreciation of the invention and the attendant advantages thereof will be clearly understood by reference to the following schematic drawings, which are not to scale, wherein:
- Fig. 1: shows the sketch of LED traffic lights when flickering is present for explaining the present invention;
- Fig. 2: shows the proposed approach based according to an exemplary embodiment of the present invention;
- Fig. 3: shows another sketch of the schematic high level architecture chart according to an exemplary embodiment of the present invention;
- Fig. 4: shows the proposed approach of the algorithm compatibility with sign recognition according to an exemplary embodiment of the present invention;
- Fig. 5: shows an example cutout according to an exemplary embodiment of the present invention;
- Fig. 6: shows a schematic diagram of the device for flicker removal by image analysis according to an exemplary embodiment of the present invention; and
- Fig. 7: shows another sketch of the method for flicker removal by image analysis according to an exemplary embodiment of the present invention.

### DETAILED DESCRIPTION OF EMBODIMENTS

The illustration in the drawings is purely schematic and does not intend to provide scaling relations or size information. In different drawings, similar or identical elements are provided with the same reference numerals.

Generally, identical parts, units, entities or steps are provided with the same reference symbols in the description.

Fig. 1 shows the sketch of LED traffic lights when flickering is present for explaining the present invention.

Fig. 2 shows the proposed approach based according to an exemplary embodiment of the present invention.

Fig. 2 shows an overview of the proposed method, in the left side of Fig. 2, we have shown a portion of traffic sign which is visible in a frame. It is worthwhile to understand that same portion of the sign will not be visible in every frame. Therefore, various accumulated frames will have different visible portions of the sign.

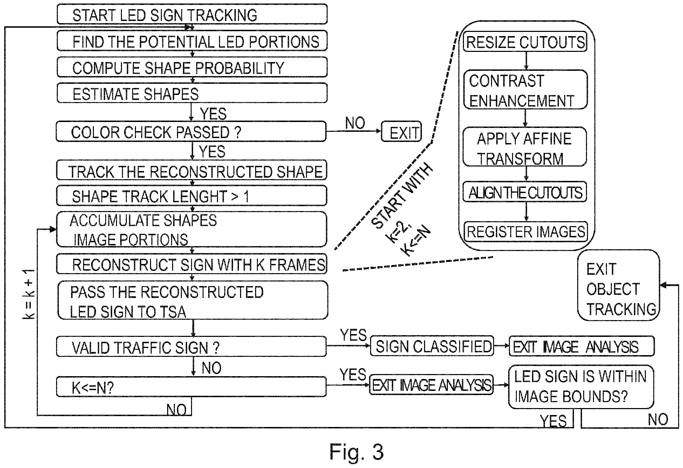

Fig. 3 shows another sketch of the schematic high level architecture chart according to an exemplary embodiment of the present invention.

Fig. 3 shows the proposed system and sign recognition module and shows that the present method fits very well in the traffic Sign Recognition, TSR, module by acting as a supplement to the detection stage of the SR module.

First stage in any classical sign recognition module is to detect the signs with a follow up tracking and classification. Since, the proposed system and sign recognition module is performing the shape detection and reconstruction, so we can directly pass the reconstructed output obtained from the proposed LED reconstruction module to classification stage.

Fig. 3 illustrates a high level concept of the proposed solution. Our proposed system accepts accumulated cutout (Cutouts are defined as cropped out regions of images which are probably traffic signs) of the flickering LED regions and reconstructs it thereby yielding a quasi-full LED region.

It is to be noted in Fig. 3 that accumulated cutouts will exhibit non-overlapping shapes over various frames. Fig. 2 should not be understood as if same piece of shape will reappear in every frame.

The algorithm has been shown in Fig. 3. Since, the problem at hand is to reconstruct the flickering LED signs therefore our algorithm starts with finding the potential LED regions in any image frame. LED cutouts can be detected in any image frame by finding out the rectangles (mostly LED signs have black background) and then performing a color check on it.

Once the LED region is found out then we compute shape probability i.e. probability whether it is a circle, triangle etc. Such operation can be achieved by using template matching approach.

However, to reduce false positive we perform a color check corresponding to the computed shape. If the color check is passed, then we initiate one track, for instance for the rectangle region containing LED sign, which is tracked across frames with the help of Kalman filter. If the LED region is a real sign, then we will get low error in between the projected position and the actual position of the sign, in the next frame.

It is to be noted here that projected position of the LED region has been computed in (n-1)-th frame by the tracker and the actual position of the LED sign has been measured in the n-th frame. Such low temporal error signifies that the current LED region is a real sign. On the other hand, if we get large error then it signifies that we are tracking a false object and then the corresponding track is killed.

If the length of the track is more than 1 then we accumulate those cutout regions in the local memory. Length of the track here refers to the cardinality of a set; Entries in that set represents instances of the low prediction error of the tracker.

Cutout will be accumulated only for the tracked LED regions, provided they fulfill low prediction error tolerance.

Once, we have accumulated the cutouts, we try to reconstruct the shape of the accumulated cutouts so that it can be fed to TSA module for classification purpose. For that purpose, we perform various operations i.e. (1) resize all the cutouts to same size based on the shape reconstruction (2) contrast enhancement (3) Perform affine transform (while considering scaling and rotation effects) on the basis of reconstructed shape, (4) Align the cutouts, and (5) Register the images.

The registration process may be performed as follows: Accumulated cutouts will have different spatial dimensions which makes the registration process complex. However, to circumvent this problem we can use the fact that accumulated cutouts belong to the same LED region and suffer from scaling effect. Scaling effect occurs when any vehicle approaches a sign; in that scenario LED traffic signs appear to be larger in spatial dimensions.

According to an exemplary embodiment of the present invention, we scale all the cutouts to same spatial dimension. After scaling to same resolution, we average all the pixel values in order to obtain the reconstructed image.

We may start this reconstruction process with k cutouts (k = 2 for first instance). After reconstruction we perform a color check to confirm that it is a valid LED sign. This color check ensures that we are passing a valid LED region for the classification.

We may pass the reconstructed LED sign to the TSA classifier; if the TSA classifier outputs garbage class for reconstructed sign (with k = 2) then we increment k and again reconstruct with k = k+1. However, to limit the time complexity of the algorithm, k cannot be more than N = 7.

Fig. 3 explains the algorithm for one object in the image only. Similar operation has to be performed for every object, found out in the image in order to utilize the LED reconstruction operation.

EXIT, in the Fig. 3 refers to the exit of the program.

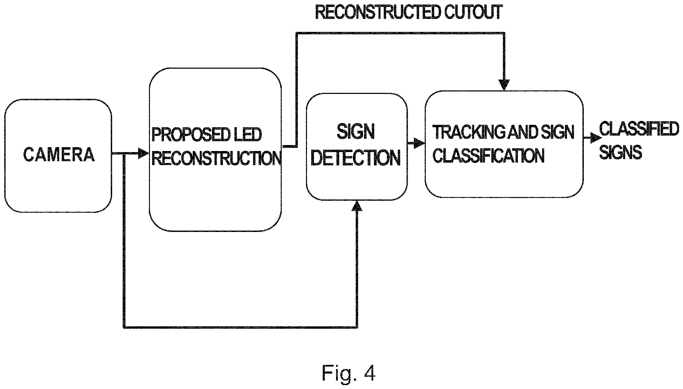

Fig. 4 shows the proposed approach of the algorithm compatibility with sign recognition according to an exemplary embodiment of the present invention.

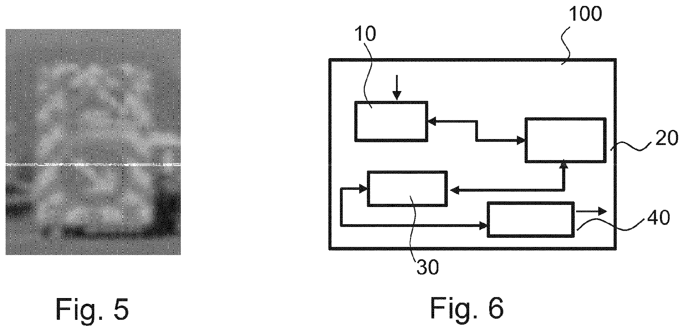

Fig. 5 shows an example cutout according to an exemplary embodiment of the present invention.

The example cutout may be extracted from a full frame.

Fig. 6 shows a schematic diagram of the device for flicker removal by image analysis according to an exemplary embodiment of the present invention.

The device 100 for flicker removal by image analysis, comprises a LED-region identifier 10, a shape constructor 20, a color verifier 30, and a frame reconstructor 40.

The LED-region identifier 10 is configured to identify a portion of a LED traffic sign in at least one starting frame provided by an image sensor.

The shape constructor 20 is configured to calculate a shape for a reconstructed LED sign based on the identified portion.

The color verifier 30 is configured to perform a color check of the reconstructed LED sign.

The frame reconstructor 40 is configured to reconstruct the verified reconstructed LED sign of the at least one starting frame in at least one another frame provided by the image sensor.

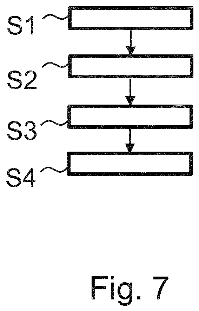

Fig. 7 shows a schematic diagram of the method for flicker removal by image analysis according to an exemplary embodiment of the present invention.

The method for flicker removal by image analysis, comprises the following steps:
As a first step of the method, identifying S1 a portion of a LED traffic sign in at least one starting frame provided by an image sensor by means of a LED-region identifier 10 is performed.
As a second step of the method, calculating S2 a shape for a reconstructed LED sign based on the identified portion by means of a shape constructor 20 is performed.
As a third step of the method, performing S3 a color check of the reconstructed LED sign by means of a color verifier 30 is conducted.
As a fourth step of the method, reconstructing S4 the verified reconstructed LED sign of the at least one starting frame in at least one another frame provided by the image sensor by means of a frame reconstructor 40 is conducted.

It has to be noted that embodiments of the present invention are described with reference to different subject-matters. In particular, some embodiments are described with reference to method type claims, whereas other embodiments are described with reference to the device type claims.

However, a person skilled in the art will gather from the above and the foregoing description that, unless otherwise notified, in addition to any combination of features belonging to one type of the subject-matter also any combination between features relating to different subject-matters is considered to be disclosed with this application.

However, all features can be combined providing synergetic effects that are more than the simple summation of these features.

While the invention has been illustrated and described in detail in the drawings and foregoing description, such illustration and description are to be considered illustrative or exemplary and not restrictive; the present invention is not limited to the disclosed embodiments.

Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. A single processor or controller or other unit may fulfill the functions of several items recited in the claims.

The mere fact that certain measures are recited in mutually different dependent claims does not indicate that a combination of these measures cannot be used to advantage. Any reference signs in the claims should not be considered as limiting the scope.

## Claims

1. Device (100) for flicker removal by image analysis, the device (100) comprising:
- a LED-region identifier (10), which is configured to identify a portion of a LED-sign in at least one starting frame provided by an image sensor;
- a shape constructor (20), which is configured to calculate a shape for a reconstructed LED sign based on the identified portion;
- a color verifier (30), which is configured to perform a color check of the reconstructed LED sign;
- a tracker, which is configured to track the shape of the reconstructed LED sign in at least one another frame provided by the image sensor;
- a memory, which is configured to accumulate cutouts, the cutouts being defined as cropped out regions of images corresponding to the tracked shape of the reconstructed LED sign; and
- a flickering LED sign frame reconstructor (40), which is configured to reconstruct the verified reconstructed LED sign based on the accumulated cutouts of the at least one starting frame and the at least one another frame provided by the image sensor, the reconstructing of the LED sign based on the accumulated cutouts comprising
applying an affine transformation to the cutouts on the basis of the shape of the reconstructed LED sign,
aligning the cutouts, and
registering the images corresponding to the cutouts.

2. The device (100) according to claim 1,
wherein the LED-region identifier (10) is configured to identify the portion of the LED-sign by identifying area of preknown geometry.

3. The device according to claim 1 or 2,
wherein the shape constructor (20) is configured to calculate the shape for the reconstructed LED sign based on template matching.

4. The device according to claim 1,
wherein the frame reconstructor (40) is configured to iteratively reconstruct the verified reconstructed LED sign in consecutive frames.

5. A method for flicker removal by image analysis, the method comprising the following steps of:
- identifying (S1) a portion of a LED traffic sign in at least one starting frame provided by an image sensor by means of a LED-region identifier (10);
- calculating (S2) a shape for a reconstructed LED sign based on the identified portion by means of a shape constructor (20);
- performing (S3) a color check of the reconstructed LED sign by means of a color verifier (30);
- track the shape of the reconstructed LED sign in at least one another frame provided by the image sensor by means of a tracker;
- accumulating cutouts, the cutouts being defined as cropped out regions of images corresponding to the tracked shape of the reconstructed LED sign, by means of a memory; and
- reconstructing (S4) the verified reconstructed LED sign based on the accumulated cutouts of the at least one starting frame and the at least one another frame provided by the image sensor by means of a frame reconstructor (40),
the reconstructing of the LED sign based on the accumulated cutouts comprising
applying an affine transformation to the cutouts on the basis of the shape of the reconstructed LED sign,
aligning the cutouts, and
registering the images corresponding to the cutouts.

## Patentansprüche

1. Vorrichtung (100) zur Flimmerbeseitigung durch Bildanalyse, wobei die Vorrichtung (100) umfasst:
- einen LED-Bereichsidentifizierer (10), der ausgebildet ist, um einen Teil eines LED-Schildes in mindestens einem Start-Frame zu identifizieren, der von einem Bildsensor bereitgestellt wird;
- einen Formkonstruktor (20), der ausgebildet ist, um eine Form für ein rekonstruiertes LED-Schild basierend auf dem identifizierten Teil zu berechnen;
- eine Farbprüfeinrichtung (30), die ausgebildet ist, um eine Farbprüfung des rekonstruierten LED-Schildes durchzuführen;
- einen Tracker, der ausgebildet ist, um die Form des rekonstruierten LED-Schildes in mindestens einem weiteren Frame nachzuverfolgen, der vom Bildsensor bereitgestellt wird;
- einen Speicher, der ausgebildet ist, um Ausschnitte zu akkumulieren, wobei die Ausschnitte als ausgeschnittene Bildbereiche definiert sind, die der nachverfolgten Form des rekonstruierten LED-Schildes entsprechen, und
- einen Framerekonstruktor (40) für ein flimmerndes LED-Schild, der ausgebildet ist, um das verifizierte rekonstruierte LED-Schild basierend auf den akkumulierten Ausschnitten des mindestens einen Start-Frames und des mindestens einen weiteren Frames, die durch den Bildsensor bereitgestellt werden, zu rekonstruieren, wobei die Rekonstruktion des LED-Schildes basierend auf den akkumulierten Ausschnitten Folgendes umfasst
Anwenden einer affinen Transformation auf die Ausschnitte auf der Grundlage der Form des rekonstruierten LED-Schildes,
Ausrichten der Ausschnitte und
Speichern der den Ausschnitten entsprechenden Bilder.

2. Vorrichtung (100) nach Anspruch 1, wobei der LED-Bereichsidentifizierer (10) ausgebildet ist, um den Teil des LED-Schildes durch Identifizieren eines Bereichs mit vorbekannter Geometrie zu identifizieren.

3. Vorrichtung nach Anspruch 1 oder 2, wobei der Formkonstruktor (20) ausgebildet ist, um die Form des rekonstruierten LED-Schildes basierend auf einer Template-Anpassung zu berechnen.

4. Vorrichtung nach Anspruch 1, bei wobei der Framerekonstruktor (40) ausgebildet ist, um das verifizierte rekonstruierte LED-Schild in aufeinanderfolgenden Frames iterativ zu rekonstruieren.

5. Verfahren zur Flimmerbeseitigung durch Bildanalyse, wobei das Verfahren die folgenden Schritte umfasst:
- Identifizieren (S1) eines Teils eines LED-Verkehrsschildes in mindestens einem Start-Frame, der von einem Bildsensor bereitgestellt wird, mittels eines LED-Bereichsidentifizierers (10);
- Berechnen (S2) einer Form eines rekonstruierten LED-Schildes basierend auf dem identifizierten Teil mittels eines Formkonstruktors (20);
- Durchführen (S3) einer Farbprüfung des rekonstruierten LED-Schildes mittels einer Farbprüfeinrichtung (30);
- Nachverfolgen der Form des rekonstruierten LED-Schildes in mindestens einem weiteren Frame, der vom Bildsensor bereitgestellt wird, mittels eines Trackers;
- Akkumulieren von Ausschnitten, wobei die Ausschnitte als ausgeschnittene Bildbereiche definiert sind, die der nachverfolgten Form des rekonstruierten LED-Schildes entsprechen, mittels eines Speichers; und
- Rekonstruieren (S4) des verifizierten rekonstruierten LED-Schildes basierend auf den akkumulierten Ausschnitten des mindestens einen Start-Frames und des mindestens einen weiteren Frames, die durch den Bildsensor bereitgestellt werden, mittels eines Frame-Rekonstruktors (40),
wobei das Rekonstruieren des LED-Schildes basierend auf den akkumulierten Ausschnitten Folgendes umfasst
Anwenden einer affinen Transformation auf die Ausschnitte auf der Grundlage der Form des rekonstruierten LED-Schildes,
Ausrichten der Ausschnitte, und
Registrieren der den Ausschnitten entsprechenden Bilder.

## Revendications

1. Dispositif (100) de suppression de scintillement par analyse d'image, le dispositif (100) comprenant :
- un identifiant de région de DEL (10), qui est configuré pour identifier une partie d'un panneau à DEL dans au moins une image de départ fournie par un capteur d'image ;
- un constructeur de forme (20), qui est configuré pour calculer une forme pour un panneau à DEL reconstruit sur la base de la partie identifiée ;
- un vérificateur de couleur (30), qui est configuré pour effectuer une vérification de couleur du panneau à DEL reconstruit ;
- un dispositif de suivi, qui est configuré pour suivre la forme du panneau à DEL reconstruit dans au moins une autre image fournie par le capteur d'image ;
- une mémoire, qui est configurée pour accumuler des découpes, les découpes étant définies comme des zones d'images découpées correspondant à la forme suivie du panneau à DEL reconstruit ; et
- un dispositif de reconstruction d'image de panneau à DEL scintillant (40), qui est configuré pour reconstruire le panneau à DEL reconstruit vérifié sur la base des découpes accumulées de l'au moins une image de départ et de l'au moins une autre image fournie par le capteur d'image, la reconstruction du panneau à DEL sur la base des découpes accumulées consistant à
appliquer une transformation affine aux découpes sur la base de la forme du panneau à DEL reconstruit,
aligner les découpes, et
enregistrer les images correspondant aux découpes.

2. Dispositif (100) selon la revendication 1, dans lequel l'identifiant de région de DEL (10) est configuré pour identifier la partie du panneau à DEL par identification d'une zone de géométrie préétablie.

3. Dispositif selon la revendication 1 ou 2, dans lequel le constructeur de forme (20) est configuré pour calculer la forme pour le panneau à DEL reconstruit sur la base d'une correspondance de modèle.

4. Dispositif selon la revendication 1, dans lequel le dispositif de reconstruction d'image (40) est configuré pour reconstruire itérativement le panneau à DEL reconstruit vérifié en images consécutives.

5. Procédé de suppression de scintillement par analyse d'image, le procédé comprenant les étapes suivantes consistant à :
- identifier (S1) une partie d'un panneau de signalisation à DEL dans au moins une image de départ fournie par un capteur d'image au moyen d'un identifiant de région de DEL (10) ;
- calculer (S2) une forme pour un panneau à DEL reconstruit sur la base de la partie identifiée au moyen d'un constructeur de forme (20) ;
- effectuer (S3) une vérification de couleur du panneau à DEL reconstruit au moyen d'un vérificateur de couleur (30) ;
- suivre la forme du panneau à DEL reconstruit dans au moins une autre image fournie par le capteur d'image au moyen d'un dispositif de suivi ;
- accumuler des découpes, les découpes étant définies comme des zones d'images découpées correspondant à la forme suivie du panneau à DEL reconstruit, au moyen d'une mémoire ; et
- reconstruire (S4) le panneau à DEL reconstruit vérifié sur la base des découpes accumulées de l'au moins une image de départ et de l'au moins une autre image fournie par le capteur d'image au moyen d'un dispositif de reconstruction d'image (40),
la reconstruction du panneau à DEL sur la base des découpes accumulées consistant à
appliquer une transformation affine aux découpes sur la base de la forme du panneau à DEL reconstruit,
aligner les découpes, et
enregistrer les images correspondant aux découpes.
